# EUROPÄISCHE PATENTANMELDUNG

(11) **EP 1 582 342 A1**
(43) Veröffentlichungstag der Anmeldung: **05.10.2005**
(21) Anmeldenummer: 05405274.1
(22) Anmeldetag: 29.03.2005
(51) Int. Cl.: B32B 7/12, B32B 27/32

(54) **Mehrschichtige Folie**

(30) Priorität: 30.03.2004 EP 04405192
(71) Anmelder: Stanipac AG, 3400 Burgdorf (CH)
(72) Erfinder: De Boer, Jurjen, 3400 Burgdorf (CH)
(74) Vertreter: Störzbach, Michael Andreas

(57) **Zusammenfassung**

Eine blasextrudierbare Folie, die nach einer ersten Öffnung eine Wiederverschliessbarkeit gewährleistet, besteht aus einer Trägerschicht (3), auf der eine Verbindungsschicht (5) und darauf eine Deckschicht (7) angeordnet ist. Die Verbindungsschicht (5) besteht im Wesentlichen aus einem drucksensiblen Hotmelt-Klebstoff. Die Trägerschicht (3) wie auch die Deckschicht (7) bestehen im Wesentlichen aus Polyethylen. Bei der Trägerschicht (3) handelt es sich beispielsweise um Polyethylen niederer Dichte und/oder hoher Dichte (LD-PE bzw. HD-PE). Die Deckschicht (7) besteht aus bis zu 100 % LLD-PE (lineares Polyethylen niederer Dichte) oder aus einer Mischung LLD-PE und Polyethylen. Durch den Anteil an LLD-PE weist die Deckschicht (7) eine höhere Adhäsion gegenüber der Verbindungsschicht (5) auf als die Trägerschicht (3). Dadurch ist gewährleistet, dass bei einer Erstöffnung, bei der ein Teil (19) der Trägerschicht (3) abgetrennt wird, die Verbindungsschicht (5) an der Deckschicht (7) verbleibt. Durch Andrücken des abgetrennten Teils (19) an die Verbindungsschicht (5) ist die Verbindung zwischen abgetrenntem Teil (19) und der Folie (1, 14) wiederhergestellt und ein mit der Folie (14) verschlossener Behälter (12) wieder verschlossen.

## Beschreibung

Die vorliegende Erfindung bezieht sich auf mehrschichtige Folien gemäss Oberbegriff des Anspruches 1. Weiterhin bezieht sich die Erfindung auf ein Herstellungsverfahren für eine solche Folie und deren Anwendung.

Eine wichtige Anwendungsart für Folien ist das Verpacken von Lebensmitteln. Eine bekannte Art ist dabei das Einlagern der Lebensmittel in einen Kunststoffbehälter (Schale), auf den eine Folie aufgelegt und dann mit den Rändern des Behälters verschweisst wird. Nachteilig an einer solchen Verpackung ist, dass sie nur einmal geöffnet werden kann. Eine Wiederverschliessbarkeit würde es gestatten, nur einen Teil des Inhaltes zu entnehmen und den Rest wenigstens kurze Zeit im verschlossenen Zustand aufbewahren zu können.

Für eine wiederverschliessbare Folie sind druckempfindliche Klebstoffe nötig. Grundsätzlich sind solche Klebstoffe bekannt. Oft genügen sie jedoch nicht den Anforderungen für die Verpackung von Lebensmitteln. Auch Konzepte für wiederverschliessbare Verpackungen sind bekannt, z.B. aus der EP-A-0,868,368, EP-A-1,053,865, EP-A-0,661,154 und der GB-A-2,319,746. Die darin beschriebenen Konzepte erlauben es jedoch nicht, Wiederverschliessbarkeit mit Folien zu erreichen, die in ihren Hauptbestandteilen auf Polyethylen beruhen. Als Hauptbestandteile werden dabei die Schichten verstanden, die für die Verschweissbarkeit, die Verträglichkeit mit Lebensmitteln und die Stabilität massgebend sind. Auch sind die angegebenen Systeme im Allgemeinen nicht geeignet, um Folien im Blas-Coextrusionsverfahren herzustellen.

Grundsätzlich stellt es auch eine Schwierigkeit dar, eine Klebstoffschicht, insbesondere eine Hotmelt-Klebeschicht, im Blas-Coextrusionsverfahren zwischen zwei Schichten eines Thermoplasten, insbesondere Polyethylen, einzubetten. Ein geeigneter Hotmelt ist jüngst in der WO-A-02/064694 beschrieben worden, die hiermit durch Bezugnahme in die Beschreibung aufgenommen wird.

Bei der in dieser Schrift angegebenen Folie des Ausführungsbeispiels wird der Hotmelt zwischen zwei Schichten einer Polymermischung durch Blas-Coextrusion eingebettet. Eine wesentliche Komponente beider Schichten ist ein elastomeres Metallocen-C8-Polyethylen (Engage 8480 [Dow Chemical]), das einen relativ niedrigen DSC-Schmelzpunkt von 100 °C und eine niedrige Dichte von 0,902 g/cm³ aufweist. Beide Merkmale zeigen eine hohe Seitenkettendichte und eine niedrige Kristallinität an. In Verbindung mit der jeweils weiteren Komponente (LD-PE bzw. MD-PE [Medium density PE]) mit jeweils einem Anteil von nur der Hälfte bzw. einem Drittel des Metallocen-C8-PE's ergibt sich ein elastisches, weiches Material für die beiden Schichten, das einen relativ niedrigen DSC-Schmelzpunkt nahe demjenigen des Hotmelts aufweist. In beiden Schichten befinden sich noch ca. 5 % übliche Additive wie Gleitmittel und Antiblockiermittel.

Insgesamt ist diese Compoundfolie damit mangels Stabilität und wegen zu hoher Nachgiebigkeit nicht als Verschlussfolie für Lebensmittelverpackungen geeignet. Vielmehr wird sie als Beschichtung einer Schale aus einem steifen Polymermaterial angegeben, die mit einer üblichen Verschlussfolie versiegelt wird. Beim Öffnen der Verpackung wird in der Versiegelungszone die Siegelschicht der Compoundfolie abgelöst, wobei ein Kohäsionsbruch des Hotmelts auftritt. Nicht zuletzt ist auch die Herstellung der Schale komplizierter und damit teurer wegen der Compoundfolie auf der Oberfläche, und es besteht die Gefahr, dass beim Füllen durch Verletzen der Oberfläche der Hotmelt freigelegt wird und damit mit den Lebensmitteln direkt in Kontakt tritt.

Eine Aufgabe der vorliegenden Erfindung besteht daher darin, eine solche (Compound-)Folie anzugeben, die für das Verpacken von Lebensmitteln, insbesondere als Verschlussfolie einer Schale, geeignet ist, und eine höhere Steifigkeit bietet.

Eine derartige Folie ist im Anspruch 1 angegeben. Die weiteren Ansprüche geben bevorzugt Ausführungsformen, Herstellungsverfahren und Verwendungen der Folie an.

Demgemäss besteht die erfindungsgemässe Folie im Wesentlichen aus einer Trägerschicht und einer Deckschicht auf der Basis von Polyethylen. Die Deckschickt zeichnet sich dabei durch einen wirksamen Anteil eines LLD-PE aus. Zwischen den beiden Schichten befindet sich eine Verbindungsschicht, die im Wesentlichen aus einem Hotmelt besteht. Der Hotmelt ist im Wesentlichen ein Heissklebstoff, der aber auch bei Zimmertemperatur als druckempfindlicher Klebstoff wirkt. Insbesondere bevorzugt ist ein Hotmelt im Wesentlichen gemäss der WO-A-02/064694 mit einem Melt-Index von mindestens 40.

Lebensmittelverpackungen bestehen oft aus einem Unterteil, z.B. in Form einer Schale, die mit einer Folie abgedeckt und an den Rändern mit der Folie verschweisst werden, um eine luftdichte Verpackung herzustellen. Für die Wiederverschliessbarkeit im Sinne der Erfindung hat es sich als wesentlich herausgestellt, dass bei der ersten Öffnung die Verbindungsschicht möglichst perfekt an dem Teil der Folie verbleiben muss, der von dem Unterteil abgezogen wird. Die Verbindungsschicht muss daher an der Deckschicht besser haften als an der Trägerschicht. Die Haftung an der Trägerschicht muss auch geringer sein als der Zusammenhalt der Verbindungsschicht, damit ein sogenannter Kohäsionsbruch vermieden wird.

Als Richtwerte an die Folie für ein leichtes Öffnen kann dabei eine Erstöffnungskraft von 5 - 6 N/cm oder weniger und eine Kraft beim Weiterreissen von 2 - 5 N/cm angenommen werden. Die Wiederöffnungskraft, d.h. die Kraft, die zum Öffnen nach einem Wiederverschliessen nötig ist, sollte auch nach mehrmaligem Verschliessen, z.B. nach ca. 10-maligem, noch mindestens 1 N/cm betragen.

Es ist bekannt, diese Eigenschaften durch zusätzliche Haftvermittlerschichten zwischen einer derartigen Verbindungsschicht und den angrenzenden Polyethylenschichten einzustellen. Diese Haftvermittlerschichten bewirken jedoch einen erhöhten Aufwand bei der Herstellung. Gemäss EP-A-1,352,036 kann der Haftvermittler auch in den Hotmelt eingebettet werden. Damit wird jedoch die Haftung an Deck- und Trägerschicht gleichermassen verbessert, um einen Kohäsionsbruch des Hotmelt zu erzwingen. Da Hotmelt auch auf der Unterseite der Verpackung beim ersten Öffnen verbleibt, ist diese Möglichkeit bei Lebensmittelverpackungen nicht anwendbar.

Es wurde nun überraschend gefunden, dass sich die Haftung des Hotmelt an Polyethylen-Material steuern lässt, indem als Folienmaterial sogenanntes LLD-PE oder eine Mischung aus LLD-PE und LD-PE eingesetzt wird. LLD-PE ist ein Copolymer von Ethylen mit längerkettigen Olefinen, z.B. Buten, Hexen oder Octen.

LLD-PE wird mit (heterogenen) Ziegler-Natta-Katalysatoren hergestellt. Bevorzugt sind heterogene Ziegler-Natta-Katalysatoren wegen der Stereokontrolle der Polymerisation und der damit einhergehenden Kristallinität des Polymers. Die dabei erzielte Stereotaktizität ergibt ein semikristallines Material. Die Steifigkeit des Materials, die aus dem kristallinen Charakter herrührt, ist für die Wiederverschliessbarkeit von Vorteil, da dadurch gewährleistet ist, dass die aufgerissene Partie wieder auf die Aufrisszone zu liegen kommt.

Eine andere Klasse von PE-Material, das bezüglich Dichte im Bereich von LLD-PE liegen kann, ist Metallocen-PE. Dieser Kunststoff wird mit Metallocenen als Katalysatoren hergestellt. Die Katalysatormoleküle bleiben jedoch mit den Makromolekülen, die auf ihnen wachsen, verbunden und erzeugen keine Taktizität. Es bilden sich damit über das Metallocen verknüpft Makromolekülknäuel, die keine Kristallinität aufweisen. Wegen des Metallocens weisen Metallocen-PE's eine bessere Haftfähigkeit auf, wegen der geringeren Steifigkeit würde sich jedoch eine Folie mit diesem Material verziehen, wonach die Aufrisszonen beim Wiederverschliessen nicht mehr aufeinander zu liegen kämen.

Metallocen-PE's können eine Dichte vergleichbar zu LLD-PE aufweisen, zeigen jedoch in der Regel eine geringere Dichte. Deswegen wie auch wegen der ansonsten deutlich verschiedenen Eigenschaften werden Metallocen-PE's selbst bei entsprechender Dichte nicht als LLD-PE bezeichnet.

Für eine höhere Steifigkeit ist es dabei vorteilhaft, ein LLD-PE mit einer Dichte von mindestens 0,910 g/cm³ zu verwenden, was eine entsprechend geringe Anzahl Seitenketten und eine höhere Kristallinität bedeutet, allerdings auch einen höheren Schmelzpunkt und damit eine hohe Verarbeitungstemperatur bedingt.

Die Haftung des Hotmelts an der Deckschicht der erfindungsgemässen mehrschichtigen Folie kann dadurch so eingestellt werden, dass die Hotmelt-Schicht als Ganzes von der Trägerschicht ablösbar ist. Darüber hinaus ist es auch nicht nötig, weitere Haftvermittler vorzusehen, die das Herstellungsverfahren verteuern. Insbesondere ist es möglich, eine solche Folie auf einer 3-Schicht-Coextrusionsanlage im Blas-Coextrusionsverfahren herzustellen.

Die Erfindung soll weiter an einem Ausführungsbeispiel unter Bezugnahme auf Figuren erläutert werden. Gehaltsangaben in Prozent sind dabei überall in der Beschreibung und den Ansprüchen als Gewichtsprozente zu verstehen, soweit nichts Anderes angegeben ist.
- Fig. 1: Schnitt durch eine erfindungsgemässe Compound-Folie;
- Fig. 2: Teilausschnitt im Randbereich eines mit einer erfindungsgemässen Folie verschlossenen Behälters; und
- Fig. 3: Ausschnitt gemäss Fig. 2, Folie abgezogen.

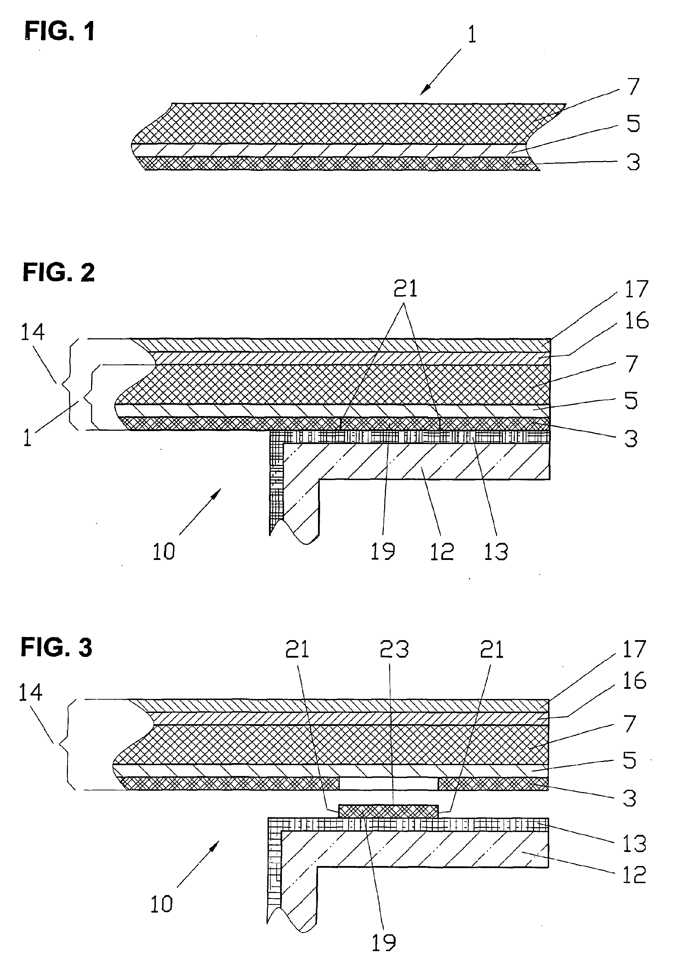

Fig. 1 zeigt die Minimalkonfiguration einer erfindungsgemässen Folie 1. Sie setzt sich im Wesentlichen zusammen aus der Siegel- und Peelschicht, im Weiteren Trägerschicht 3 genannt, der Verbindungsschicht 5 und der Kaschierschicht, im Weiteren Deckschicht 7.

Die Trägerschicht 3 besteht aus Polyethylen niederer Dichte (LD-PE), wie es für Verpackungsfolien im Lebensmittelbereich üblich ist. Denkbar sind aber auch Polyethylen hoher Dichte (HD-PE) oder eine Mischung aus HD-PE und LD-PE. Es hat sich erwiesen, dass die Dichte der Trägerschicht mindestens 0,916 g/cm³, bevorzugt mindestens 0,918 g/cm³ betragen muss, um ein sauberes Aufreissen der Verpackung zu gewährleisten (siehe unten). Eine mögliche Erklärung hierfür ist, dass ein höherer Anteil an LD-PE oder ein LD-PE mit zu geringer Dichte zu elastisch ist und auch besser an der Verbindungsschicht haftet. Als Dicke der Trägerschicht hat sich ein Bereich von 0,005 mm bis 0,040 mm bewährt, insbesondere eine Dicke von ungefähr 0,015 mm. Auch eine zu dicke Trägerschicht erschwert ein sauberes Aufreissen der Verpackung, eine zu dünne Trägerschicht ist dagegen nicht stabil genug, z.B. während des Verschweissens der Folie mit dem Behälter, der durch die Folie verschlossen werden soll, oder ergibt einen zu geringen Widerstand beim ersten Aufreissen.

Eine weitere Verbesserung in dieser Hinsicht kann dadurch erzielt werden, dass die Trägerschicht frei von einem sogenannten Gleitmittel ausgeführt ist. Ist jedoch ein Gleitmittel nötig, so kann der dadurch in der Regel auftretenden Reduktion der Adhäsion des Hotmelt durch einen Anteil von LLD-PE in der Trägerschicht entgegengewirkt werden. Dieser Anteil ist dabei höchstens so gross wie die übrigen Polymere (LD-PE, HD-PE) und liegt bevorzugt deutlich darunter, d. h. bei höchstens 30 %.

Die Verbindungsschicht 5 ist ein an sich bekannter, druckempfindlicher Hotmelt-Klebstoff, d.h. ein Hotmelt, der unter Druck wieder an einer Oberfläche haftet. Im Hinblick auf das Blasextrudieren wird ein Hotmelt gewählt, der eine Einstelltemperatur hat, die etwas unterhalb derjenigen von Polyethylen liegt. Beispielsweise liegt die Einstell- oder Verarbeitungstemperatur des Hotmelts bei 110 °C - 160 °C, wenn für die Deckschicht (siehe unten) Temperaturen um 185 °C und für die Trägerschicht um 160 °C vorgegeben sind.

In den Versuchen hat sich erwiesen, dass Hotmelts mit einem Melt-Index bis zu 70 verwendbar sind. Als besonders gut geeignet hat sich ein Hotmelt mit einem Melt-Index von 40 erwiesen. Die Dicke der Verbindungsschicht beträgt 0,005 mm bis 0,025 mm, bevorzugt 0,010 mm bis 0,020 mm. Die geringe Dicke bis zu 0,01 mm oder sogar 0,005 mm ist u.a. dadurch möglich, dass der Hotmelt beim Aufreissen vollständig von der Siegelschicht abgelöst wird, da mit der Dicke der Hotmelt-Schicht auch die Klebekraft beim Wiederverschliessen zunimmt .

Der Hotmelt entspricht im Wesentlichen der WO-A-02/064694, jedoch mit einem Melt-Index von mindestens 40. Der Hotmelt setzt sich damit wie folgt zusammen:
- Blockcopolymer auf Styrolbasis, oder eine Mischung daraus. Im Wesentlichen besteht das Polymer aus Styrol und wenigstens einem anderen Monomer wie Ethylen, Propylen, Isopren, Butadien oder Buten. Als Strukturen treten Di-, Tri- und Multiblock in linearer, radialer oder sternförmiger Konfiguration auf.
- Kompatibles Klebeharz mit einem markanten aliphatischen Charakter, um die Verträglichkeit mit dem aliphatischen Anteil des Blockcopolymers zu verbessern. Vorgeschlagen werden z.B.: Polyterpene, Kolophonium, Polymere aus aliphatischen oder aromatischen Fraktionen, auch hydriert.

Die Deckschicht setzt sich aus einem Polyethylen niederer Dichte oder höherer Dichte, gegebenenfalls auch in Mischung, mit einem Anteil an einem sogenannten linearen Polyethylen niederer Dichte (LLD-PE) zusammen. Der Anteil an LLD-PE in der Deckschicht 7 bewirkt eine bessere Adhäsion des Hotmelts der Verbindungsschicht 5. Werden also Trägerschicht 3 und Deckschicht 7 auseinandergezogen, so verbleibt die Verbindungsschicht 5 geschlossen an der Deckschicht 7. Eine Nebenbedingung hierbei ist, dass die Adhäsion der Verbindungsschicht 5 an die Trägerschicht 3 niedriger ist als die Kohäsionskraft innerhalb der Verbindungsschicht 5, was bei den gegebenen Materialien ohne Weiteres gegeben ist. Insbesondere ist die Adhäsion von Hotmelts an Polyethylenen hoher und niederer Dichte entsprechend niedrig. Namentlich bevorzugt wird in der Deckschicht die Verwendung von LD-PE, da dies das übliche Material bei derartigen Folien darstellt. Grundsätzlich ist auch die Verwendung von LLD-PE ohne Anteil an HD-PE und LD-PE möglich. Aber ein geeignetes LLD-PE bedingt erfahrungsgemäss eine niedrigere Ausstossleistung, wodurch die Produktionskosten erhöht werden.

LLD-PE ist ein Copolymerisat aus Polyethylen und einfach ungesättigten Olefinen mit 4 bis 8 C-Atomen (Buten, Hexen [verzweigt und linear], Octen). Denkbar ist aber auch als Variante ein Copolymerisat von Ethylen und Propylen. Als besonders gut geeignet haben sich jedoch LLD-PE-Produkte mit Octen erwiesen.

Das LLD-PE weist eine Dichte von mindestens 0,910 g/cm³, bevorzugt nicht mehr als 0,930 g/cm³ auf, wodurch die Art und Anzahl Seitenketten global vorgegeben ist.

Der Gehalt an LLD-PE kann von reinem LLD-PE (100 %) bis 20 % betragen. Bevorzugt ist jedoch ein Gehalt von 20 % bis 95 % LLD-PE. Im Bereich von 40 % bis 85 % LLD-PE wurden besonders gute Resultate erzielt.

Für das Blas-Coextrusionsverfahren können weitere, an sich bekannte Zusätze in den Schichten vorhanden sein, die z.B. die Aufwickelbarkeit verbessern, wie Antiblockiermittel, Gleitmittel. In der Trägerschicht ist jedoch kein Gleitmittel enthalten, oder sie weist zusätzlich zum Gleitmittel einen Gehalt an LLD-PE auf, wodurch die Verringerung der Adhäsion des Hotmelts an der Trägerschicht durch das Gleitmittel kompensiert wird.

Ein üblicher Anteil von Additiven an einem Material ist bis 5 % der Gesamtmasse. Die Schichten bestehen damit im wesentlichen aus dem Polymermaterial, d.h. sie enthalten neben dem Polymermaterial und den Additiven allenfalls noch geringfügige Mengen anderer Beimengungen.

Allgemein ist die Dicke der Deckschicht mindestens so gross wie diejenige der Trägerschicht. In der Praxis beträgt die Dicke unter Einhaltung dieser Bedingungen oft 0,030 mm bis 0,100 mm. Prinzipiell ist hier jedoch keine obere Grenze gesetzt.

Eine beispielhafte Folie besteht aus folgenden Komponenten:
- Trägerschicht:
   - 95 - 100 % LD-PE, Dichte: 0,927 g/cm³; Typ: Lupolen 3020K (Basell);
   - 0 - 5 % Additive.
- Verbindungsschicht:
   Hotmelt-Klebstoff M 3156/40 (Bostik Findley).
- Deckschicht:
   - 55 - 60 % LD-PE: Lupolen 2424H (Basell);
   - 40 % LLD-PE: Dowlex 5056 (Dow Chemical);
   - 0 - 5 % Additive.

Fig. 2 zeigt den Randbereich eines Behälters 10 für Lebensmittel als die bevorzugte Anwendung der erfindungsgemässen Folie. Der Behälter 10 besteht aus einer Schale 12, die mit einer Siegelschicht 13 bedeckt ist. Die Siegelschicht besteht aus einem Material, das mit der Trägerschicht 3 verschweissbar ist, um die Anwendungsfolie 14 mit der Schale 12 gasdicht verbinden zu können. Die Anwendungsfolie 14 setzt sich zusammen aus der Folie 1, die oben beschrieben wurde, und weiteren Schichten auf der Deckschicht, nämlich eine Schicht Kaschierkleber 16, der die Barrierefolie 17 mit der Folie 1 verbindet.

Die Verschweissung verfolgt ringsum im Bereich 19 der Trägerschicht 3. Beim ersten Öffnen reisst die Trägerschicht 3 an den Grenzen 21, wie es in Fig. 3 dargestellt ist. Die Kraft bei dieser ersten Öffnung, die sogenannte Peel-Kraft, wird damit in erster Linie durch die Dicke der Trägerschicht 3 bestimmt. Da die Adhäsionskraft zwischen Verbindungsschicht 5 und Deckschicht 7 durch den Gehalt an LLD-PE in der Deckschicht 7 deutlich grösser ist als die Adhäsion zwischen Verbindungsschicht 5 und Trägerschicht 3, löst sich der Bereich 19 sauber von der Verbindungsschicht 5 ab. Es bleiben damit praktisch keine Klebstoffreste auf der Oberfläche des Bereiches 19 zurück, und die Gefahr ist geringer, dass sich Fremdmaterial darauf ablagert und haften bleibt, wodurch die Wiederverschliessbarkeit beeinträchtigt würde. Durch die Druckempfindlichkeit des Hotmelt-Klebstoffes der Verbindungsschicht 5 kann die Verpackung einfach wieder geschlossen werden, indem die Folie 14 wieder auf die Schale 12 und damit die Oberfläche 23 auf die Oberfläche der Deckschicht 5 gedrückt wird und diese aneinander haften bleiben.

Da die Folie 1 nur aus 3 Schichten besteht, kann sie vorteilhafterweise auf einer üblichen Co-Extrusionsanlage in Dreischichtextrusion hergestellt werden. Die Extrusionsanlage muss für die Verarbeitung von LD-PE und LLD-PE ausgerüstet sein, wenn LD-PE für die Trägerschicht und gegebenenfalls auch in der Deckschicht verwendet wird. Die Verarbeitungstemperatur der eingesetzten PolyethylenTypen werden wie in der Technik üblich eingestellt. Der Hotmelt-Klebstoff wird mit einer Einstelltemperatur verarbeitet, die etwas unterhalb des Polyethylens liegt. Die weiteren Schichten (Kaschierkleber, Barrierefolie) werden nach einem üblichen Verfahren nach dem Extrudieren der Folie aufgebracht, um die Anwendungsfolie zu erhalten.

Aus der vorangehenden Beschreibung sind dem Fachmann Abwandlungen und Weiterentwicklungen zugänglich, ohne den Schutzbereich der Erfindung zu verlassen, der durch die Ansprüche definiert ist. Denkbar ist dabei insbesondere:
- Anbringen von weiteren und/oder anderen Schichten auf der Deckschicht, um z.B. die Durchlässigkeit für Stoffe und Strahlung (Licht) einzustellen, die Bedruckbarkeit zu verbessern usw.
- Verwenden der erfindungsgemässen Folie anstelle der Schale: Dazu wird eine Folie ohne Barriere verwendet, deren Oberseite (Deckschicht) mit der Trägerschicht verschweissbar ist. Möglich sind Anordnungen aus zwei oder auch mehreren, paarweise wenigstens peripher miteinander verschweissten Folien, wobei sich zwischen jeweils zwei Folien zwei oder mehr Objekte befinden (z. B. Käsescheiben). Dank der Wiederverschliessbarkeit können dann die Objekte auch einzeln entnommen werden und die Verpackung jeweils wieder um die verbleibenden geschlossen werden. Die Barriereschicht würde die Verschweissbarkeit beeinträchtigen, denkbar ist aber eine solche auf den äussersten Folien.

### Glossar

- DSC: ("Differential scanning calorimetry") Differential-Thermoanalyse
- HD-PE: High density polyethylene
- LD-PE: Low density polyethylene
- LLD-PE: Linear low density polyethylene
- MD-PE: Medium density polyethylene
- Melt-Index: Schmelzindex, DIN 53735 (1983)

## Patentansprüche

1. Mehrschichtige, durch Blas-Coextrusion herstellbare Folie (1, 14) mit einer Trägerschicht (3) und einer Deckschicht (7), die durch eine Verbindungsschicht (5) verbunden sind, wobei
• die Verbindungsschicht im Wesentlichen aus einem drucksensiblen Heissklebstoff (Hotmelt) besteht,
• die Deckschicht und die Trägerschicht im Wesentlichen aus Polyethylen bestehen, und
• die Deckschicht einen wirksamen Anteil eines Copolymeren niederer Dichte aus Ethylen und einem längerkettigen Olefin mit mindestens 3 Kohlenstoffatomen enthält, wobei das Copolymer ein LLD-PE ist und damit gegenüber Polyethylen niederer Dichte eine erhöhte Linearität und eine Dichte von wenigstens 0,910 g/cm³ aufweist,
um die Haftung zwischen Heisskleber und Deckschicht so zu erhöhen, dass bei einem Teilen der Folie der Heissklebestoff an der Deckschicht haften bleibt.

2. Mehrschichtige Folie (1, 14) gemäss Anspruch 1, **dadurch gekennzeichnet, dass** die Kohäsionskraft des Heissklebstoffs (5) grösser ist als seine Adhäsionskraft gegenüber dem Material der Trägerschicht (3), so dass die Trägerschicht (3) vom Heissklebstoff (5) im Wesentlichen ohne Rückstände an Heissklebstoff ablösbar ist.

3. Mehrschichtige Folie (1, 14) gemäss einem der Ansprüche 1 bis 2, **dadurch gekennzeichnet, dass** das längerkettige Olefin 3 bis 8 C-Atome, bevorzugt 4 - 8 und weiter bevorzugt 8 C-Atome, aufweist und im Monomerzustand einfach ungesättigt ist.

4. Mehrschichtige Folie (1, 14) gemäss einem der Ansprüche 1 bis 3, **dadurch gekennzeichnet, dass** das Copolymer eine Dichte von 0,910 g/cm³ bis 0,930 g/cm³ hat.

5. Mehrschichtige Folie (1, 14) gemäss einem der Ansprüche 1 bis 4, **dadurch gekennzeichnet, dass** der Anteil des Copolymeren in der Oberschicht 20 bis 100 Gew.-%, bevorzugt 20 bis 95 Gew.-%, und insbesondere bevorzugt 40 bis 85 Gew.-% beträgt.

6. Mehrschichtige Folie (1, 14) gemäss einem der Ansprüche 1 bis 5, **dadurch gekennzeichnet, dass** die Dicke der Verbindungsschicht, 0,005 mm bis 0,025 mm, bevorzugt 0,01 mm bis 0,02 mm beträgt.

7. Mehrschichtige Folie (1, 14) gemäss einem der Ansprüche 1 bis 6, **dadurch gekennzeichnet, dass** der Melt-Index des Heissklebstoffs im Bereich 40 bis 70 liegt und bevorzugt ungefähr 40 beträgt.

8. Mehrschichtige Folie (1, 14) gemäss einem der Ansprüche 1 bis 7, **dadurch gekennzeichnet, dass** die Trägerschicht (3) im Wesentlichen ein HD-PE, ein LD-PE, eine Mischung von HD-PE und LD-PE oder eine Mischung der vorgenannten Materialien mit einem LLD-PE ist, wobei der Gehalt an LLD-PE in dieser Mischung höchstens 50 %, bevorzugt höchstens 30 % beträgt.

9. Mehrschichtige Folie (1, 14) gemäss einem der Ansprüche 1 bis 8, **dadurch gekennzeichnet, dass** die Dichte der Trägerschicht mindestens 0,916 g/cm³ beträgt, bevorzugt mindestens 0,918 g/cm³.

10. Mehrschichtige Folie (1, 14) gemäss Anspruch 9, **dadurch gekennzeichnet, dass** die Trägerschicht im Wesentlichen aus LLD-PE oder einer Mischung von LLD-PE mit HD-PE, LD-PE oder einer Mischung aus HD-PE und LD-PE besteht.

11. Mehrschichtige Folie (1, 14) gemäss einem der Ansprüche 1 bis 10, **dadurch gekennzeichnet, dass** die Trägerschicht 0,005 bis 0,04 mm dick ist.

12. Mehrschichtige Folie (1, 14) gemäss einem der Ansprüche 1 bis 11, **dadurch gekennzeichnet, dass** die Trägerschicht (3) im Wesentlichen frei von einem Gleitmittel ist oder eine wirksame Menge Gleitmittel und einen Anteil LLD-PE aufweist, um eine vom Gleitmittel verursachte Verringerung der Adhäsion zwischen Trägerschicht (3) und Hotmelt (5) zu kompensieren.

13. Mehrschichtige Folie (1, 14) gemäss einem der Ansprüche 1 bis 12, **dadurch gekennzeichnet, dass** die Deckschicht (7) mindestens so dick ist wie die Trägerschicht (3).

14. Verfahren zur Herstellung einer mehrschichtige Folie (1, 14) gemäss einem der Ansprüche 1 bis 13, **dadurch gekennzeichnet, dass** wenigstens der Teil aus Trägerschicht (3), Verbindungsschicht (5) und Deckschicht (7) im Blas-Coextrusionsverfahren hergestellt wird.

15. Verfahren gemäss Anspruch 14, **dadurch gekennzeichnet, dass** der Heissklebstoff bei einer Einstelltemperatur verarbeitet wird, die höchstens gleich derjenigen des Materials der Trägerschicht(3) ist und bevorzugt nicht mehr als 50 °C darunter liegt.

16. Verwendung der Folie (1, 14) gemäss einem der Ansprüche 1 bis 11 als Verschlussfolie (14) auf einem Behälter (12), einer Schale und/oder einer Folie einer Lebensmittelverpackung (10), wobei die Verschlussfolie mit dem Rand des Behälters, der Schale bzw. der Folie verschweisst wird.
